# EUROPEAN PATENT APPLICATION

(11) **EP 3 565 282 A1**
(43) Date of publication of application: **06.11.2019**
(21) Application number: 17888403.7
(22) Date of filing: 31.07.2017
(51) Int. Cl.: H04W 4/02

(54) **IBEACON-BASED IN-VEHICLE POSITIONING APPARATUS AND METHOD, AND IN-VEHICLE DEVICE CONTROL SYSTEM**

(30) Priority: 29.12.2016 CN 201611242982
(71) Applicant: Nio Co., Ltd., Shanghai 201804 (CN)
(72) Inventor: LI, Bin, Shanghai 201804 (CN); YU, Bin, Shanghai 201804 (CN); LI, Tianshu, Shanghai 201804 (CN); XIANG, Dingwei, Shanghai 201804 (CN); ZHANG, Rui, Shanghai 201804 (CN); SHI, Xiaolei, Shanghai 201804 (CN); XING, Hui, Shanghai 201804 (CN); LIAO, Furong, Shanghai 201804 (CN); PAN, Rongkai, Shanghai 201804 (CN)
(74) Representative: Vossius & Partner Patentanwälte Rechtsanwälte mbB
(86) International application number: PCT/CN2017/095125
(87) International publication number: WO 2018/120830

(57) **Abstract**

The present application relates to the field of positioning, particularly to a positioning apparatus and method for locating devices within a vehicle based on iBeacon. The application aims at solving the problem that occupants at different positions within the vehicle interfere with each other when controlling on-board equipments. To this end, the apparatus comprises: at least three iBeacon modules, each of which can send out broadcasting data packets; at least one terminal device capable of receiving the broadcasting data packets sent out by the iBeacon modules. The positioning apparatus can also extract RSSI values of the broadcasting data packets and calculate specific position of the at least one terminal device within the vehicle according to the RSSI values. With the technical solutions of the present application, when occupants in a vehicle operate on-board equipments through their terminal devices, each occupant can merely control the equipments near him/her rather than those in the vicinity of other occupants, so that occupants at different positions within the vehicle will not interfere with each other.

## Description

### TECHNICAL FIELD

The present application relates to the field of positioning, particularly to an on-board terminal device positioning apparatus, method and on-board equipment control system based on iBeacon.

### BACKGROUND

As an increasing number of vehicles enter into ordinary families, the use of vehicles is becoming more and more frequent. Accordingly, installed with more on-board equipments such as on-board air conditioner, on-board stereo and vehicle window systems, etc., the vehicles become increasingly intelligent and user-friendly. However, the control panel of on-board equipments is usually disposed in the front of the vehicle and therefore accessible by only occupants seated at front row seats. Accordingly, occupants seated on back row seats have to rely on front row occupants to operate the equipments, greatly degrading the occupants' riding experience. On the other hand, requirements for controlling these equipments vary from occupant to occupant according to their specific on-board position, so the first thing to do is to determine each occupant's specific position so as to meet his operating requirement. This problem is what the application aims to solve.

### SUMMARY

To solve the above described problems in the prior art, that is, to determine the specific positions of the occupants when they try to control on-board equipments, the present application provides a positioning apparatus for locating devices within a vehicle based on iBeacon, which comprises: at least three iBeacon modules, each of which can send out broadcasting data packets; at least one terminal device capable of receiving the broadcasting data packets sent out by the iBeacon modules; wherein the positioning apparatus can also extract RSSI values of the broadcasting data packets and calculate specific position of the at least one terminal device within the vehicle according to the RSSI values.

In a preferable embodiment of the positioning apparatus for locating devices within a vehicle based on iBeacon, wherein there are three iBeacon modules, the at least one terminal device can receive the broadcasting data packets sent out by each iBeacon module and then extract RSSI value of each broadcasting data packet, the at least one terminal device can also calculate the specific position of the at least one terminal device within the vehicle according to the RSSI values.

In a preferable embodiment of the positioning apparatus for locating devices within a vehicle based on iBeacon, wherein the three iBeacon modules are located respectively at the trim panel above the front window of left B pillar of the vehicle, at the trim panel above the front window of right B pillar of the vehicle and at the center of the connecting line of the back sides of two C pillars of the vehicle.

In a preferable embodiment of the positioning apparatus for locating devices within a vehicle based on iBeacon, wherein the specific position of the terminal device comprises the driver seat, the co-driver seat and back row seats.

In a preferable embodiment of the positioning apparatus for locating devices within a vehicle based on iBeacon, wherein the at least one terminal device is a cellphone or a tablet computer; and/or the positioning apparatus can also entitle the terminal device with right to control on-board equipments according to the specific position of the terminal device within the vehicle.

In another aspect, the present application provides a positioning method for locating devices within a vehicle based on iBeacon, which comprises the following steps: providing at least three iBeacon modules; sending out broadcasting data packets by means of the iBeacon modules; providing at least one terminal device; receiving the broadcasting data packets sent out by the iBeacon modules by means of the terminal device; extracting RSSI values of the broadcasting data packets; and calculating specific position of the terminal device within the vehicle according to the RSSI values.

In a preferable embodiment of the positioning method for locating devices within a vehicle based on iBeacon, wherein the step of providing at least three iBeacon modules further includes providing three iBeacon modules, the terminal device can extract RSSI value of each broadcasting data packet after receiving the broadcasting data packets sent out by each iBeacon module; and the step of calculating specific position of the terminal device within the vehicle according the RSSI values further includes calculating the specific position of the terminal device within the vehicle according to the differences among the three RSSI values.

In a preferable embodiment of the positioning method for locating devices within a vehicle based on iBeacon, wherein the three iBeacon modules are located respectively at the trim panel above the front window of left B pillar of the vehicle, at the trim panel above the front window of right B pillar of the vehicle and at the center of the connecting line of the back sides of two C pillars of the vehicle.

In a preferable embodiment of the positioning method for locating devices within a vehicle based on iBeacon, wherein the specific position of the terminal device comprise the driver seat, the co-driver seat and back row seats.

In a preferable embodiment of the positioning method for locating devices within a vehicle based on iBeacon, wherein the at least one terminal device is a cellphone or a tablet computer; and/or the positioning method also includes entitling the terminal device with right to control on-board equipments according to the specific position of the terminal device within the vehicle.

The present application further provides a control system for controlling devices within a vehicle based on iBeacon, wherein the system includes a positioning apparatus for locating devices within the vehicle and an authorizing module, the positioning apparatus includes: at least three iBeacon modules, each of which can send out broadcasting data packets; at least one terminal device capable of receiving the broadcasting data packets sent out by the iBeacon modules; wherein the positioning apparatus can also extract RSSI values of the broadcasting data packets and calculate specific position of the at least one terminal device within the vehicle according to the RSSI values; and the authorizing module can entitle the terminal device with right to control on-board equipments based on its specific position within the vehicle.

In a preferable embodiment of the control system for controlling devices within a vehicle based on iBeacon, wherein the authorizing module entitles the terminal device only with right to control those on-board equipments near itself.

In a preferable embodiment of the control system for controlling devices within a vehicle based on iBeacon, wherein there are three iBeacon modules, the at least one terminal device extracts the RSSI value of each broadcasting data packet after receiving the broadcasting data packets sent out by each iBeacon module, the at least one terminal device can also calculate specific position of the at least one terminal device within the vehicle according to the RSSI values.

In a preferable embodiment of the control system for controlling devices within a vehicle based on iBeacon, wherein the three Beacon modules are located respectively at the trim panel above the front window of left B pillar of the vehicle, at the trim panel above the front window of right B pillar of the vehicle and at the center of the connecting line of the back sides of two C pillars of the vehicle.

In a preferable embodiment of the control system for controlling devices within a vehicle based on iBeacon, wherein the specific position of the terminal device comprises the driver seat, the co-driver seat and back row seats.

In a preferable embodiment of the control system for controlling devices within a vehicle based on iBeacon, wherein the at least one terminal device is a cellphone or a tablet computer.

In summary, in the preferred embodiments of the application, the terminal device receives the broadcasting data packets sent out by several iBeacon modules, and calculates specific position of the terminal device according to the RSSI values of the broadcasting data packets. Further, according to its specific position, the terminal device is entitled with right to control at least some on-board equipments, such that each occupant can merely control the equipments near him/her rather than those in the vicinity of other occupants. As a result, occupants at different positions within the vehicle will not interfere with each other when operating equipments within the vehicle.

### BRIEF DESCRIPTION OF THE DRAWINGS

Fig.1 is a structural schematic view of a positioning apparatus for locating devices within a vehicle based on iBeacon according to the present application; and
Fig.2 is a flow chart of a positioning method for locating devices within a vehicle based on iBeacon according to the present application.

### DETAILED DESCRIPTION

The preferred embodiments of the application are described below with reference to the accompanying figures. As will be understood by those skilled in the art, these embodiments are simply used for interpreting the technical principle of the application and are not intended to limit its protection scope in any way.

In the embodiment to be described, the scenario of controlling equipments within a vehicle by a cellphone APP is taken as an example. Different occupants have different requirements in operating on-board equipments due to their varied positions within the vehicle. With the technical solutions of the application, each occupant can be directly located through his/her cellphone and then be entitled with right to control the equipments of the vehicle with his/her phone according to his/her position within the compartment. Accordingly, this requires determination of the position of the cellphone of each occupant. Therefore, the present application provides a positioning apparatus for locating devices within a vehicle based on iBeacon. iBeacon is a technology, through which a communication area of the iBeacon base station is automatically created by means of Bluetooth Low Energy (that is, Bluetooth 4.0 or Bluetooth Smart); when a communication device enters the area, respective applications will remind the owner whether to access the communication network. With the aid of a mini wireless sensor which can be located within various objects and the Bluetooth Low Energy, users can transmit data through smart device. An iBeacon apparatus set consists of one or more iBeacon modules sending out and transmitting their unique ID codes within certain range, the software on the receiving device can spot the iBeacon apparatus and realize many functions.

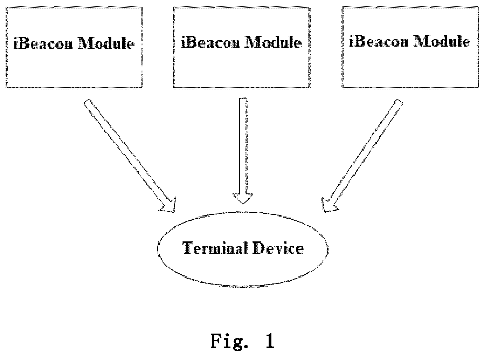

The positioning apparatus for locating devices within a vehicle based on iBeacon of the application comprises: at least three iBeacon modules, each of which is able to send out broadcasting data packets; at least one terminal device capable of receiving the broadcasting data packets. In addition, the positioning apparatus can also extract RSSI (Received Signal Strength Indication) values of the broadcasting data packets and calculate the specific positions of the terminal devices within the vehicle. Particularly, with reference to Fig.1, Fig.1 is a structural schematic view of the positioning apparatus for locating devices within a vehicle based on iBeacon according to the present application. As shown in Fig.1, in this embodiment, there are three iBeacon modules, the terminal devices can receive the broadcasting data packets sent out by each iBeacon module. In a possible embodiment, the terminal devices receive the broadcasting data packets sent out by each iBeacon module and extract RSSI value of each broadcasting data packet. Then, the position of each terminal device is calculated in accordance with the differences among these RSSI values. In this regard, it is to be noted that calculating the specific positions of the signal receiving devices through the differences among three or more RSSI values can be realized by a variety of methods well known to those skilled in the art such as GPS positioning methods, further description regarding the same will be omitted herein.

Furthermore, after receiving the broadcasting data packets sent out by each iBeacon module, the terminal devices can send the broadcasting data packets to other local or remote calculating device(s), such as vehicle ECU. Thereafter, the calculating device(s) such as vehicle ECU calculates RSSI value of each broadcasting data packet and the particular positions of these terminal devices within the vehicle. Specifically, in this embodiment, the positions of these terminal devices may be the driver seat, the co-driver seat and back row seats (second row or other rows behind the first row). In this way, each user carrying the terminal device can be specifically located. Further, for example, the three iBeacon modules in this embodiment can be provided respectively at the trim panel above the front window of the left B pillar (that is, the trim panel above the driver side window), the trim panel above the front window of the right B pillar (that is, the trim panel above the co-driver window) and the center of the connecting line of the back sides of the two C pillars (that is, the center point of the connecting line of the most posterior points of the two back row windows). These iBeacon modules periodically send out broadcasting data packets. It is to be pointed out that in this embodiment, although the three iBeacon modules are located as above, these positions are merely explanatory and in no way to limit the protection scope of the application. In practice, the iBeacon modules can be located on other suitable places either within or outside the vehicle by those skilled artisans as desired, and a greater or less number of iBeacon modules can be provided to meet the different requirements of positioning accuracy. As will be understood by the skilled person in the field, increased accuracy is needed to precisely locate the seats where the terminal devices are situated due to compact space occupied by vehicle seats. As an optimized embodiment, the three iBeacon modules situated respectively at the trim panel above the front window of the left B pillar, the trim panel above the front window of the right B pillar and the center of the connecting line of the back sides of the two C pillars enable a positioning accuracy of 20-30 cm, such that the terminal devices within the vehicle can be precisely located (whether they are at the driver seat, the co-driver seat or one of the back row seats).

Further, the positioning apparatus of the application can entitle the terminal devices with right to control on-board equipments in line with their specific positions. Specifically, the terminal devices can not only receive broadcasting data packets sent out by the iBeacon modules but also control on-board equipments, for instance air conditioning system or window system of the vehicle. The right of the terminal devices may vary according to their respective positions within the vehicle. By way of example, when the right to operate on-board equipments are given to the terminal devices according to their specific positions, if the occupant is seated at a back row seat with his/her terminal device, he/she may control for example the air conditioner to adjust only the back row seat temperature instead of the temperature of driver seat or co-driver seat, so that occupants at different positions within the vehicle will not interfere with each other when operating on-board electronic equipments.

Since cellphones have become necessary equipments for everyone nowadays, the terminal devices are preferably cellphones in this embodiment. As will be understood by those skilled in art, however, these terminal devices can also be other portable electric devices, for example tablet computer etc. In a possible embodiment, an APP installed on a cellphone receives periodical broadcasting data packets from the iBeacon modules and then calculates the RSSI value of each broadcasting data packet, to determine the specific position of the phone in accordance with the differences among three calculated RSSI values and further determine the specific position of its owner according to the position of the cellphone. After receiving the broadcasting data packets from each iBeacon module, the APP can also send the received broadcasting data packets to other calculating device(s) such as ECU of the vehicle, which then calculates the RSSI value of each broadcasting data packet in order to determine the specific position of the cellphone.

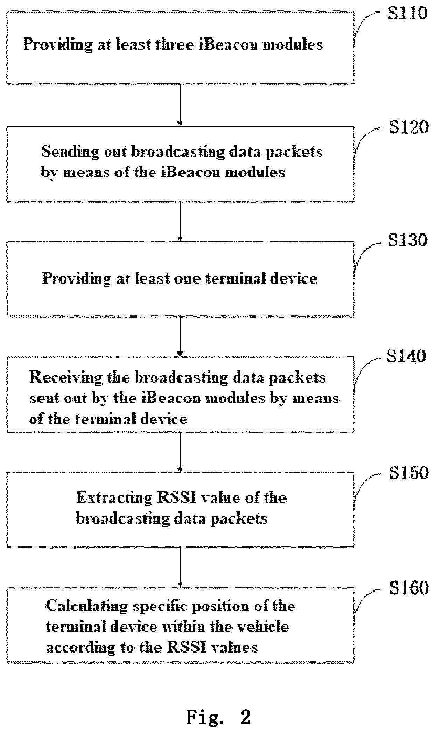

On the other hand, the present application also provides a method for positioning devices within a vehicle based on iBeacon. With reference to Fig.2, Fig.2 is a flow chart of a method for positioning devices within a vehicle based on iBeacon of the present application. As shown in Fig.2, this positioning method comprises steps described below. At step S110, at least three iBeacon modules are provided. In this specific embodiment, three iBeacon modules are provided respectively at the trim panel above the front window of the left B pillar, the trim panel above the front window of the right B pillar and the center of the connecting line of the back sides of the two C pillars. It is to be noted that the iBeacon modules can be located on other suitable places either within or outside the vehicle by those skilled artisans as desired, and a greater or less number of iBeacon modules can be provided to meet different requirements of positioning accuracy. At step S120, broadcasting data packets are sent out by means of the iBeacon modules. At step S130, terminal devices are provided. In this embodiment, these terminal devices are preferably cellphones or tablet computers, and so on. At step S140, the broadcasting data packets sent out from the iBeacon modules are received by the terminal devices. By way of example, an APP installed on a cellphone receives the periodical broadcasting data packets. At step S150, RSSI values of the broadcasting data packets are extracted. At step S160, the specific position of the terminal device within the vehicle is calculated according to the RSSI values. For example, in this embodiment, the APP installed on a cellphone receives periodical broadcasting data packets from the iBeacon modules and then extracts the RSSI value of each broadcasting data packet, to determine the specific position of the cellphone within the vehicle in accordance with the differences among three extracted RSSI values and further determine the specific position of its owner according to the cellphone's position. Additionally, after receiving the broadcasting data packets from each iBeacon module, the APP can also send the received broadcasting data packets to other calculating device(s) such as ECU of the vehicle, which then calculates the RSSI value of each broadcasting data packet in order to determine the cellphone's specific position. In this embodiment, the specific positions of these terminal devices may be the driver seat, the co-driver seat and back row seats (second row or other rows behind the first row). Of course, the specific positions of cellphones within vehicle can be divided more accurately by those skilled in the art according to specific applications and the number of iBeacon modules.

Further, the positioning method also includes entitling the terminal devices with right to control on-board equipments in line with their specific positions. When the right to operate on-board equipments are given to the terminal devices according to their specific positions, if the occupant is seated at a back row seat with his/her terminal device, he/she may control for example the air conditioner to adjust only the back row seat temperature instead of the temperature of driver seat or co-driver seat, so that occupants at different positions within the vehicle will not interfere with each other when operating on-board electronic equipments.

Finally, although not shown in accompanying drawings, an on-board equipment control system based on iBeacon can also be realized by the technical solutions of the application. The system comprises the above positioning apparatus for locating terminal devices and an authorizing module for entitling the terminal devices with right to control on-board equipments based on their specific positions. Specifically, the positioning apparatus includes: at least three iBeacon modules each of which is able to send out broadcasting data packets; and at least one terminal device capable of receiving the broadcasting data packets sent out by the iBeacon modules. Also, the positioning apparatus can extract the RSSI values of the broadcasting data packets of the iBeacon modules and calculate the specific position of each terminal device according to the RSSI values. Accordingly, the authorizing module entitles the terminal device with right to operate on-board equipments in the vicinity of itself after the position of the terminal device is determined.

With regard to the authorizing module, it is to be pointed out that not only can it be realized with existing systems (for example, it is designed as a function module of the vehicle's ECU) but also can it be provided as an application specific module. Furthermore, physically speaking, the authorizing module can either be integrated with other apparatuses or devices, or provided separately. All these changes and variations are made without departing from the general principle of the disclosure and will fall within its protection scope.

In a preferred embodiment, there are three iBeacon modules respectively located at the trim panel above the front window of the left B pillar, the trim panel above the front window of the right B pillar and the center of the connecting line of the back sides of the two C pillars. The terminal devices can receive the broadcasting data packets sent out from each iBeacon module and then extract the RSSI value of each broadcasting data packet and finally calculate the specific positions of the terminal devices within the vehicle based on the RSSI values. Similar to the above described, these terminal devices may be any portable electronic devices, such as cellphones or tablet computers.

In conclusion, with the technical solutions of the present application, when occupants in a vehicle operate on-board equipments through their terminal devices, each occupant can control only the devices near him/her rather than the devices in the vicinity of other occupants, in order that occupants at different positions within the vehicle will not interfere with each other when operating on-board equipments.

So far the technical solutions of the application are described with reference to the preferred embodiments shown in the accompanying figures. As will be understood by those skilled in the art, however, these specific embodiments are not intended to limit protection scope of the application. Without departing from the principle of the application, various changes may be made and equivalents may be substituted for related technical features by those skilled in the art, the varied technical solutions will fall within the protection scope of the application.

## Claims

1. A positioning apparatus for locating devices within a vehicle based on iBeacon, comprising:
at least three iBeacon modules, each of which can send out broadcasting data packets;
at least one terminal device capable of receiving the broadcasting data packets sent out by the iBeacon modules;
wherein the positioning apparatus can also extract RSSI values of the broadcasting data packets and calculate specific position of the at least one terminal device within the vehicle according to the RSSI values.

2. The positioning apparatus for locating devices within a vehicle based on iBeacon as set forth in claim 1, wherein there are three iBeacon modules, the at least one terminal device can receive the broadcasting data packets sent out by each iBeacon module and then extract RSSI value of each broadcasting data packet,
the at least one terminal device can also calculate specific position of the at least one terminal device within the vehicle according to the RSSI values.

3. The positioning apparatus for locating devices within a vehicle based on iBeacon as set forth in claim 2, wherein the three iBeacon modules are located respectively at the trim panel above the front window of left B pillar of the vehicle, at the trim panel above the front window of right B pillar of the vehicle and at the center of the connecting line of the back sides of two C pillars of the vehicle.

4. The positioning apparatus for locating devices within a vehicle based on iBeacon as set forth in claim 3, wherein the specific position of the terminal device comprises the driver seat, the co-driver seat and back row seats.

5. The positioning apparatus for locating devices within a vehicle based on iBeacon as set forth in any one of claims 1-4, wherein the at least one terminal device is a cellphone or a tablet computer; and/or
the positioning apparatus can also entitle the terminal device with right to control on-board equipments according to the specific position of the terminal device within the vehicle.

6. A positioning method for locating devices within a vehicle based on iBeacon, comprising the following steps:
providing at least three iBeacon modules;
sending out broadcasting data packets by means of the iBeacon modules;
providing at least one terminal device;
receiving the broadcasting data packets sent out by the iBeacon modules by means of the terminal device;
extracting RSSI values of the broadcasting data packets; and
calculating specific position of the terminal device within the vehicle according to the RSSI values.

7. The positioning method for locating devices within a vehicle based on iBeacon as set forth in claim 6, wherein the step of providing at least three iBeacon modules further includes providing three iBeacon modules, the terminal device can extract RSSI value of each broadcasting data packet after receiving the broadcasting data packets sent out by each iBeacon module; and
the step of calculating specific position of the terminal device within the vehicle according to the RSSI values further includes calculating the specific position of the terminal device within the vehicle according to the differences among the three RSSI values.

8. The positioning method for locating devices within a vehicle based on iBeacon as set forth in claim 7, wherein the three Beacon modules are located respectively at the trim panel above the front window of left B pillar of the vehicle, at the trim panel above the front window of right B pillar of the vehicle and at the center of the connecting line of the back sides of two C pillars of the vehicle.

9. The positioning method for locating devices within a vehicle based on iBeacon as set forth in claim 8, wherein the specific position of the terminal device comprises the driver seat, the co-driver seat and back row seats.

10. The positioning method for locating devices within a vehicle based on iBeacon as set forth in any one of claims 6-9, wherein the at least one terminal device is a cellphone or a tablet computer; and/or
the positioning method also includes entitling the terminal device with right to control on-board equipments according to the specific position of the terminal device within the vehicle.

11. A control system for controlling devices within a vehicle based on iBeacon, wherein the system includes a positioning apparatus for locating devices within a vehicle and an authorizing module, the positioning apparatus includes:
at least three iBeacon modules, each of which can send out broadcasting data packets;
at least one terminal device capable of receiving the broadcasting data packets sent out by the iBeacon modules;
wherein the positioning apparatus can also extract RSSI values of the broadcasting data packets and calculate specific position of the at least one terminal device within the vehicle according to the RSSI values; and
the authorizing module can entitle the terminal device with right to control on-board equipments based on its specific position within the vehicle.

12. The control system for controlling devices within a vehicle based on iBeacon as set forth in claim 11, wherein the authorizing module entitles the terminal device only with right to control those on-board equipments near itself.

13. The control system for controlling devices within a vehicle based on iBeacon as set forth in claim 12, wherein there are three iBeacon modules, the at least one terminal device can extract the RSSI value of each broadcasting data packet after receiving the broadcasting data packets sent out by each iBeacon module,
the at least one terminal device can also calculate specific position of the at least one terminal device within the vehicle according to the RSSI values.

14. The control system for controlling devices within a vehicle based on iBeacon as set forth in claim 13, wherein the three iBeacon modules are located respectively at the trim panel above the front window of left B pillar of the vehicle, at the trim panel above the front window of right B pillar of the vehicle and at the center of the connecting line of the back sides of two C pillars of the vehicle.

15. The control system for controlling devices within a vehicle based on iBeacon as set forth in claim 14, wherein the specific position of the terminal device comprises the driver seat, the co-driver seat and back row seats.

16. The control system for controlling devices within a vehicle based on iBeacon as set forth in claim 15, wherein the at least one terminal device is a cellphone or a tablet computer.
